# EUROPEAN PATENT APPLICATION

(11) **EP 1 521 323 A2**
(43) Date of publication of application: **06.04.2005**
(21) Application number: 04021497.5
(22) Date of filing: 09.09.2004
(51) Int. Cl.: H01M 8/04, H01M 8/24, G06F 1/16, G06F 1/26

(54) **Fuel cell**

(30) Priority: 30.09.2003 JP 2003342335
(71) Applicant: Kabushiki Kaisha Toshiba, Tokyo 105-8001 (JP)
(72) Inventor: Tajima, Nobuyasu, Minato-ku Tokyo 105-8001 (JP); Shibuya, Nobuo, Minato-ku Tokyo 105-8001 (JP); Hirazawa, Hiroaki, Minato-ku Tokyo 105-8001 (JP); Miyamoto, Hirohisa, Minato-ku Tokyo 105-8001 (JP)
(74) Representative: Henkel, Feiler & Hänzel

(57) **Abstract**

A housing (12) of a fuel cell has a first region, a second region, and a partition (42) which divides the first and second regions. A generator section (7) in the first region has an electromotive unit (52) which generates power based on a chemical reaction and a fuel tank which contains a fuel. Located in the second region is a control section (29) which has a control circuit board (30) and controls operation of the generator section.

## Description

The present invention relates to a fuel cell usable as a power source for an electronic device or the like.

Currently, secondary batteries, such as lithium ion batteries, are mainly used as power sources for electronic devices, such as portable notebook personal computers, and mobile devices, etc. These modern electronic devices have increasingly higher functions and require increased power consumption and longer operating time. To meet these requirements, compact, high-output fuel cells that require no charging are expected as novel power sources. Various types of fuel cells exist. A direct methanol fuel cell (hereinafter referred to as DMFC) that uses a methanol solution as its fuel, in particular, has advantages over one that uses hydrogen as its fuel, easier fuel handling and simpler construction. Thus, the DMFC is a power source for an electronic device that is currently drawing a lot of attention.

Normally, a DMFC has a housing that houses a generator section for actual power generation and a control circuit section that controls the operation of the generator section. The generator section is provided with a fuel tank, mixing tank, liquid pump, air pump, etc. The fuel tank contains high-concentration methanol. The methanol in the fuel tank is diluted with water in the mixing tank. The liquid pump pressure-feeds the methanol that is diluted in the mixing tank to an electromotive unit. The air pump is used to supply air to the electromotive unit. The electromotive unit has an anode and a cathode. It generates power based on a chemical reaction by feeding the diluted methanol and air to the anode and cathode sides, respectively. As this is done, the electromotive unit is heated to high temperature with reaction heat that is produced by a chemical change.

According to a fuel cell described in Jpn. Pat. Appln. KOKAI Publication No. 7-6777, for example, the control circuit section is provided with a printed circuit board in the housing and semiconductor devices mounted on the circuit board. Heat that is produced by power generation is discharged into the housing via the surface of the electromotive unit and anode and cathode passages. Air in the housing is discharged for ventilation with a cooling fan or air blower that is attached to the inner surface of the housing.

In the fuel cell described above, the power generation is performed utilizing a chemical reaction in the electromotive unit. When this is done, the electromotive unit is heated to high temperature with reaction heat that is produced by a chemical change. Therefore, steam that contains products of the reaction is produced besides water and methanol contained in a fuel, and some of it is discharged into the housing. The steam that contains the chemical substances is acid. If the control section is touched by the steam, therefore, metallic parts of its control circuit may suffer corrosion or short-circuiting. If the control circuit is corroded or shorted in this manner, it is hard to control the generator section normally, so that the reliability of the fuel cell lowers.

The present invention has been made in consideration of these circumstances, and its object is to provide a fuel cell with improved reliability, in which a control section is protected against corrosion, short-circuiting, etc.

A fuel cell according to an aspect of the present invention is characterized by comprising:
a housing having a first region, a second region, and a partition which divides the first and second regions;
a generator section located in the first region of the housing and having an electromotive unit which generates power based on a chemical reaction; and
a control section which has a control circuit board located in the second region of the housing and controls operation of the generator section.

This summary of the invention does not necessarily describe all necessary features so that the invention may also be a sub-combination of these described features.

The invention can be more fully understood from the following detailed description when taken in conjunction with the accompanying drawings, in which:
FIG. 1 is a perspective view showing a fuel cell according to an embodiment of the invention;
FIG. 2 is a perspective view showing the fuel cell connected to a personal computer;
FIG. 3 is a sectional view showing the fuel cell and the personal computer;
FIG. 4 is a perspective view showing a bottom wall of a housing of the fuel cell;
FIG. 5 is a perspective view showing the interior of the fuel cell;
FIG. 6 is a plan view, partially in section, showing the fuel cell;
FIG. 7 is a view schematically showing a generator section of the fuel cell;
FIG. 8 is a view typically showing a cell structure of an electromotive unit of the fuel cell;
FIG. 9 is a view showing a cathode passage and a second radiator section of the fuel cell; and
FIG. 10 is a block diagram showing the generator section and a control section of the fuel cell.

A fuel cell according to an embodiment of the present invention will now be described in detail with reference to the accompanying drawings.

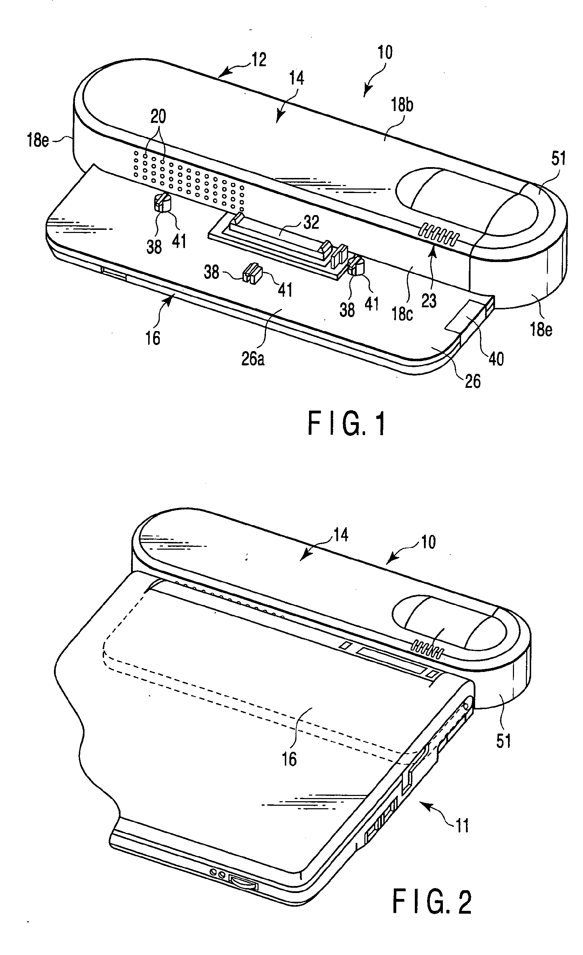

As shown in FIGS. 1 to 3, a fuel cell 10 is composed of DMFCs that use methanol as a liquid fuel. It can be used as a power source for an electronic device, such as a personal computer 11.

The fuel cell 10 is provided with a housing 12.
The housing 12 has a substantially prism-shaped body 14 that extends horizontally and a bearer section 16 that extends from the body. The bearer section 16 is a flat rectangular structure that can carry a rear portion of the personal computer 11 thereon. The body 14 that defines a first region of the housing 12 houses a fuel tank, electromotive unit, mixing tank, etc., which constitute a generator section (mentioned later).
A control section 29, a locking mechanism for locking the computer 11 on the bearer section, etc. are arranged in the bearer section 16 that defines a second region of the housing 12.

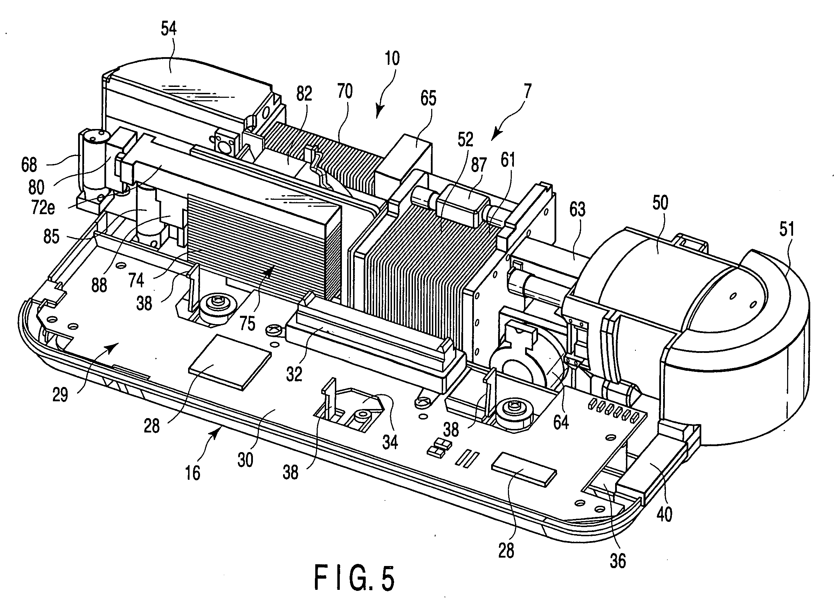

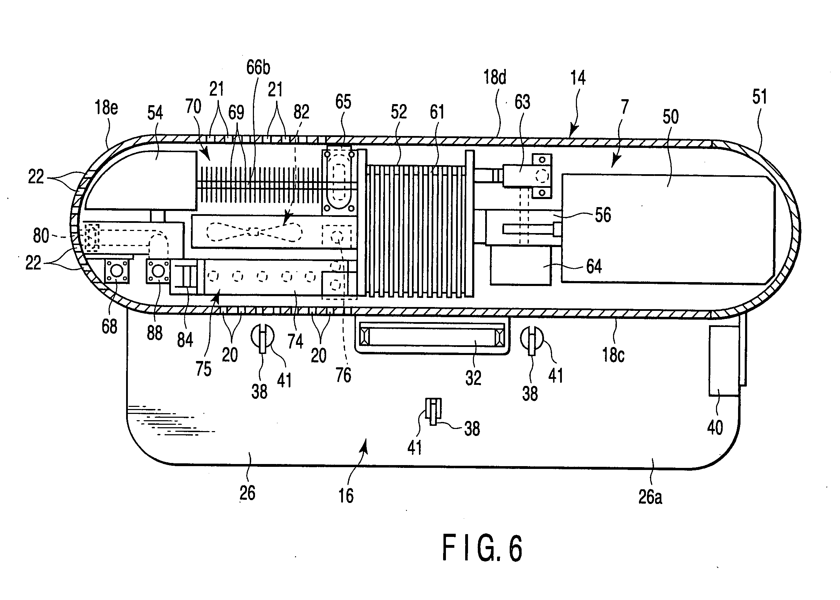

As shown in FIG. 1 and FIGS. 3 to 6, the body 14 has a flat bottom wall 18a, top wall 18b, front wall 18c, rear wall 18d, and a pair of sidewalls 18e.
The bottom wall 18a is integral with a bottom wall of the bearer section 16. The top wall 18b extends substantially parallel to the bottom wall 18a.
The front wall 18c is situated between the walls 18a and 18b. Each sidewall 18e has an outwardly convex curved surface. A large number of vents 20 are formed in the front wall 18c. Corresponding in position to the vents 20, a large number of vents 21 are formed in the rear wall 18d. One of the sidewalls 18e of the body 14 is formed having a large number of vents 22.
Legs 24 are arranged on the outer surface of the bottom wall 18a. Indicators 23 for indicating the operating state of the fuel cell 10 are arranged on the front end portion of the top wall 18b of the body 14.

The bearer section 16 is provided with a flat top wall 26 that extends forward from the lower end portion of the front wall 18c of the body 14. The top wall 26 faces the front half of the bottom wall 18a across a gap and extends slightly declining from the body side. The top wall 26 forms a supporting surface 26a on which the personal computer 11 is placed.

The bearer section 16 houses the control section 29 for controlling the operation of the generator section 7. The control section 29 is provided with a control circuit board 30 that is located in the bearer section 16 and extends substantially parallel to the top wall 26. Electronic components, including semiconductor devices 28 and a connector 32, are mounted on the circuit board 30. The connector 32 is located adjacent to the body 14 in the center of the bearer section 16 and projects from the supporting surface 26a through the top wall 26. Further, the control section 29 is provided with a power source, driver, etc. for driving the generator section, as mentioned later.

The bearer section 16 houses a locking plate 34 that is movable in the longitudinal direction.
Three hooks 38, for example, are set up on the locking plate 34, which constitutes the locking mechanism, and project from the supporting surface 26a through the top wall 26. Located in the bearer section 16, moreover, is an eject lever 36, which moves the locking plate 34, along with the hooks 38, toward an unlocking position. An eject button 40 for actuating the eject lever 36 is provided on one side edge portion of the bearer section 16. Positioning protrusions 41 are formed adjacent to the hooks 38 on the supporting surface 26a.

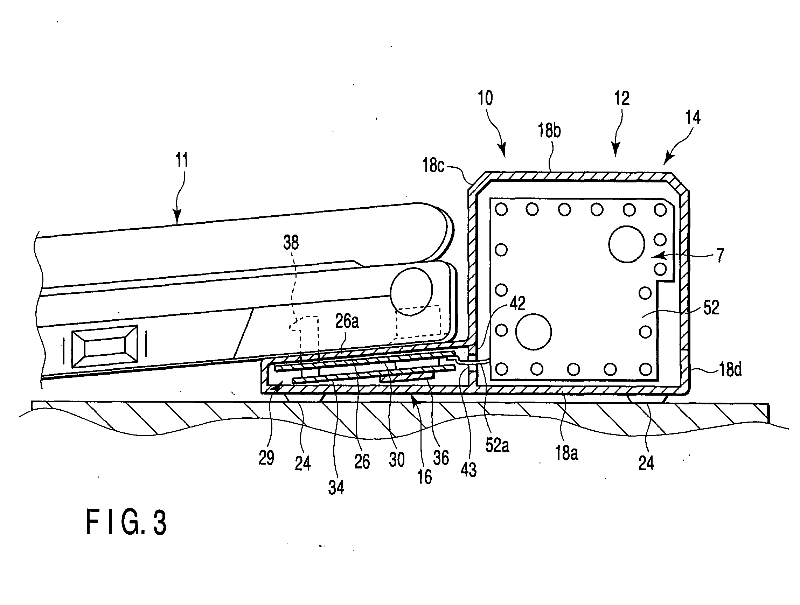

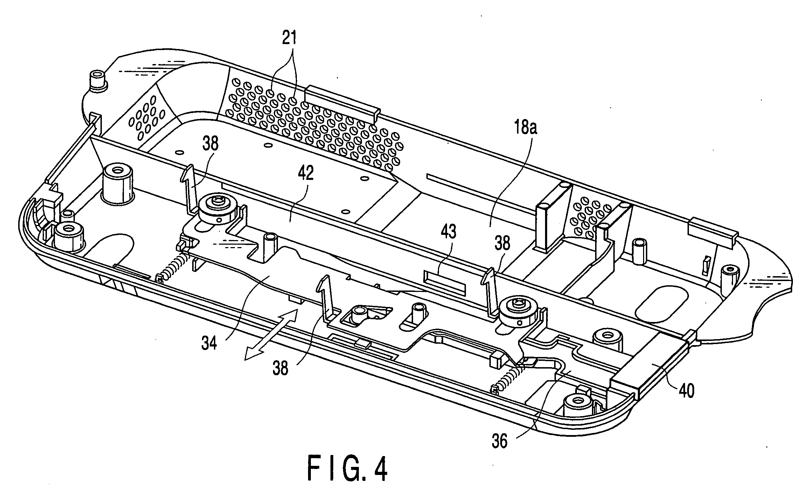

As shown in FIGS. 3 and 4, the interior of the bearer section 16 that is provided with the control section 29 and the interior of the body 14 in which the generator section 7 is located are divided by a partition wall 42 set up on the bottom wall 18a.
The partition wall 42 serving as a partition extends covering the overall length of the housing 12 in its longitudinal direction. The wall 42 is formed having a slot 43 through which wires for electrically connecting the generator section 7 and the control section 29 are passed. Preferably, the opening area of the slot 43 should be restricted to about 10% or less of the overall area of the partition wall 42. A plurality of slots 43 may be formed in place of one. Also in this case, however, the sum of the respective opening areas of the slots should preferably be restricted to about 10% or less of the overall area of the wall 42.

As shown in FIGS. 2 and 3, the rear end portion of the personal computer 11 is placed on the supporting surface 26a of the bearer section 16 in a manner such that it is positioned by the positioning protrusions 41. The computer 11 engages the hooks 38 and is locked in a mounting position. A connector (not shown) of the computer 11 is connected mechanically and electrically to the connector 32 of the bearer section 16. Thus, the fuel cell 10 and the personal computer 11 are connected mechanically and electrically to each other.

As shown in FIGS. 3, 5, 6 and 7, the generator section 7 comprises a fuel tank 50 on one side in the body 14, an electromotive unit 52 in the central portion of the body, and a mixing tank 54 on the other side in the body. The electromotive unit 52 generates power based on a chemical reaction. The fuel tank 50 contains high-concentration methanol as a liquid fuel. The tank 50 is formed as a cartridge that can be attached to and detached from the body 14. One side portion of the body 14 is formed as a cover 51 that can be removed when the tank 50 is attached or detached.

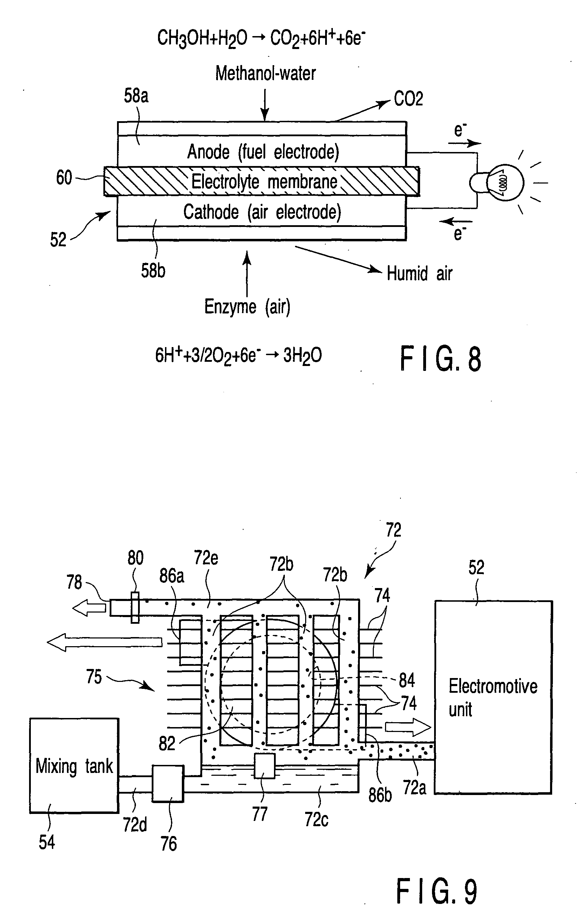

The fuel tank 50 is connected to the mixing tank 54 by means of a fuel supply line (not shown).
The fuel supply line is provided with a first liquid pump 56, which feeds the fuel from the fuel tank to the mixing tank. As shown in FIG. 8, the electromotive unit 52 is formed by laminating a plurality of cells. Each cell is formed of an anode (fuel electrode) 58a, a cathode (air electrode) 58b, and an electrolyte membrane 60 between the electrodes. A large number of cooling fins 61 are arranged around the electromotive unit 52.

As shown in FIGS. 3, 5, 6 and 7, the body 14 houses an air pump 64 that supplies air to the cathode 58b of the electromotive unit 52 through an air valve 63. The air pump 64 constitutes an air supply section. A fuel supply pipe 66a and a fuel recovery pipe 66b are connected between the electromotive unit 52 and the mixing tank 54 and extend parallel to each other.
They form an anode passage through which the fuel is circulated between the anode 58a of the electromotive unit and the mixing tank 54. The fuel supply pipe 66a is connected with a second liquid pump 68 that feeds the fuel from the mixing tank 54 to the electromotive unit 52. The fuel recovery pipe 66b is provided with a gas-liquid separator 65 for separating the fuel discharged from the electromotive unit 52 from carbon dioxide produced by the chemical reaction. A large number of vertically extending radiator fins 69 are mounted around the fuel supply pipe 66a and the fuel recovery pipe 66b, and constitute a first radiator section 70. The vents 21 in the rear wall 18d of the body 14 are opposed to the radiator section 70.

A discharge pipe 72 is connected to the electromotive unit 52 and forms a cathode passage through which products of power generation and air are discharged. The cathode passage has a first passage 72a, branch passages 72b, reservoir portion 72c, recovery passage 72d, and second passage 72e.
The first passage 72a extends from the electromotive unit 52. The branch passages 72b diverge from the first passage and extend at an angle to the horizontal direction. The reservoir portion 72c communicates with the first passage and the respective lower ends of the branch passages. It stores water discharged from the first passage and water condensed in the branch passages. The recovery passage 72d guides the water stored in the reservoir portion into the mixing tank 54. The second passage 72e communicates with the respective upper ends of the branch passages. In the present embodiment, the branch passages 72b extend individually in the vertical direction.

The recovery passage 72d is provided with a recovery pump 76 that supplies the water in the reservoir portion 72c to the mixing tank 54. Located in the reservoir portion 72c, moreover, is a water level detector 77 that detects the level of the water in the reservoir portion.

A large number of horizontally extending radiator fins 74 are mounted around the discharge pipe 72 that forms the branch passages 72b, and constitute a second radiator section 75. The radiator section 75, which includes the branch passages 72b, is opposed substantially parallel to the first radiator section 70 with a gap between them. The second passage 72e extends substantially horizontally and has an exhaust port 78, which is situated near the vents 22 of the body 14 and opens toward the vents 22. In the second passage 72e, an exhaust valve 80 is located near the exhaust port 78. The second passage 72e is provided with a gas discharge pipe 81, which guides carbon dioxide separated by the gas-liquid separator 65 into the second passage 72e. The vents 20 that are formed in the front wall 18c of the body 14 are opposed to the second radiator section 75.

A cooling fan 82, a centrifugal fan, is provided between and opposite the first radiator section 70 and the second radiator section 75. The cooling fan 82 is located so that the rotation axis of its blades extends substantially horizontally and at right angles to the radiator sections 70 and 75. The fan 82 has a fan case that covers the blades. As shown in FIG. 9, the case is formed having an intake port 84 opposed to the first radiator section 70, another intake port 84 opposed to the second radiator section 75, and two exhaust ports 86a and 86b that open in a direction tangent to the rotating direction of the blades. The one exhaust port 86a opens toward the vents 22 of the body 14, and the other exhaust port 86b toward the electromotive unit 52.

Further, the generator section 7 is provided with a tank valve 87, a concentration sensor 88, and a concentration detection pump 85. The valve 87 is connected to the mixing tank 54. The sensor 88 detects the concentration of the fuel in the mixing tank 54. The pump 85 circulates the fuel in the mixing tank through the sensor.

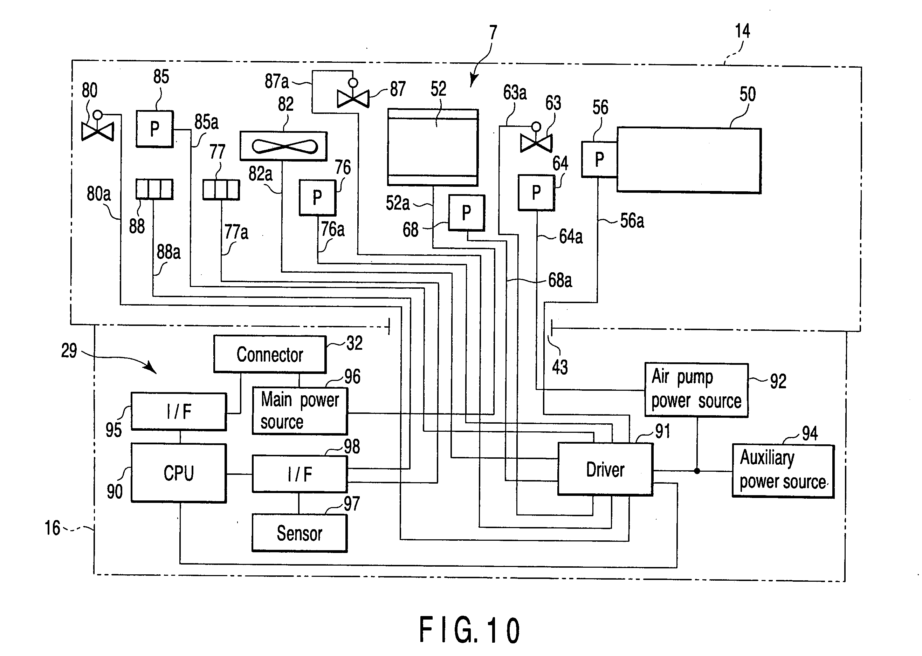

As shown in FIG. 10, a control circuit of the control section 29 in the bearer section 16 comprises a driver 91 connected to a CPU 90, air pump power source 92, and auxiliary power source 94. The power sources 92 and 94 are connected to the driver 91.
The connector 32 is connected to the CPU 90 through an interface 95 and also connected to a main power source 96.

The first and second liquid pumps 56 and 68, recovery pump 76, and concentration detection pump 85, which are arranged in the body 14 and constitute the generator section 7, are connected electrically to the control circuit board 30 by wires 56a, 68a, 76a and 85a, respectively. They are connected electrically to the driver 91 through the control circuit board 30.
The air pump 64 is connected electrically to the control circuit board 30 by a wire 64a and connected to the air pump power source 92 through the control circuit board. The cooling fan 82 is connected electrically to the control circuit board 30 by a wire 82a and also connected to the driver 91. The water level detector 77 and the concentration sensor 88 are connected to the control circuit board 30 by wires 77a and 88a, respectively. They deliver their respective detection signals to the CPU 90 through an interface 98. An eject sensor 97 for detecting the movement of the eject lever 36 is connected to the CPU 90 through the interface 98.

The electromotive unit 52 is connected to the main power source 96 by a wire 52a and supplies generated power through the power source 96 and the connector 32. The air valve 63, exhaust valve 80, and tank valve 87, which are formed of a solenoid by each, are connected electrically to the control circuit board 30 by wires 63a, 80a and 87a, respectively, and also connected to the driver 91.

The wires that connect the generator section 7 and the control section 29 are pulled around from inside the body 14 into the bearer section 16 through the slot 43 in the partition wall 42.

If the fuel cell 10 constructed in this manner is used as a power source for the personal computer 11, the rear end portion of the computer is first placed on the bearer section 16 of the fuel cell, locked in position, and connected mechanically and electrically to the fuel cell through the connector 32. In this state, the power generation by the fuel cell 10 is started. Under the control of the control section 29, in this case, methanol is supplied from the fuel tank 50 to the mixing tank 54 by the first liquid pump 56 and diluted to a given concentration with water for use as a solvent that flows back from the electromotive unit 52. The methanol that is diluted in the mixing tank 54 is supplied through the anode passage to the anode 58a of the electromotive unit 52 by the second liquid pump 68. Air is supplied to the cathode 58b of the electromotive unit 52 by the air pump 64. As shown in FIG. 8, the supplied methanol and air undergo a chemical reaction in the electrolyte membrane 60 between the anode 58a and the cathode 58b. Thereupon, electric power is generated between the anode 58a and the cathode 58b. The power generated in the electromotive unit 52 is supplied to the personal computer 11 through the control circuit board 30, main power source 96, and connector 32.

As the power generation reaction advances, carbon dioxide and water are produced as reaction products on the sides of the anode 58a and the cathode 58b, respectively, of the electromotive unit 52. The carbon dioxide that is formed on the anode side and the methanol are fed into the gas-liquid separator 65 and subjected to gas-liquid separation in it. Thereafter, the carbon dioxide is delivered to the cathode passage through the gas discharge pipe 81. The methanol is returned to the mixing tank 54 through the anode passage.

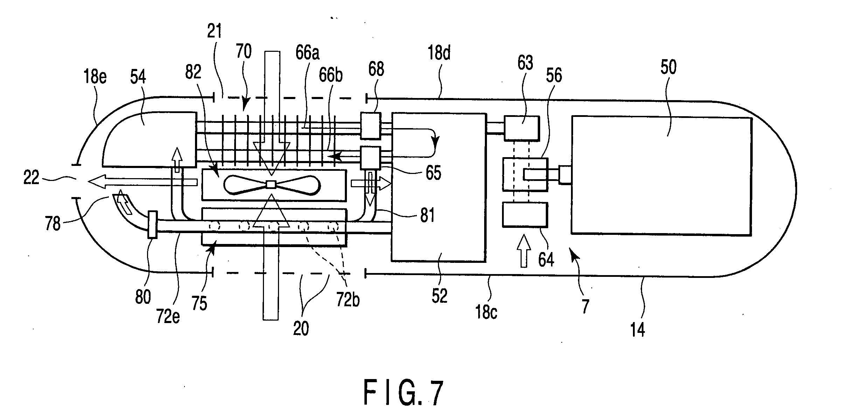

As shown in FIGS. 7 and 9, most of the water produced on the side of the cathode 58b is converted into steam, which, along with air, is discharged into the cathode passage. The discharged water and steam pass through the first passage 72a, and the water is delivered to the reservoir portion 72c. The steam and air flow upward through the branch passages 72b to the second passage 72e. As this is done, the steam that flows through the branch passages 72b is cooled and condensed by the second radiator section 75. Water that is produced by the condensation flows downward in the branch passages 72b by gravity and is recovered in the reservoir portion 72c. The water recovered in the reservoir portion 72c is delivered to the mixing tank 54 by the recovery pump 76, mixed with the methanol, and then fed again to the electromotive unit 52.

Some of the air and steam that are fed to the second passage 72e pass through the exhaust valve 80, and are discharged into the body 14 through the exhaust port 78 and further to the outside through the vents 22 of the body. The carbon dioxide that is discharged from the anode side of the electromotive unit 52 passes through the second passage 72e, and is discharged into the body 14 through the exhaust port 78 and further to the outside through the vents 22 of the body.

While fuel cell 10 is operating, the cooling fan 82 is actuated, whereupon the outside air is introduced into the body 14 through the vents 20 and 21 in the body. As shown in FIGS. 7 and 9, the outside air that is introduced into the body 14 through the vents 21 and the air in the body 14 pass around the first radiator section 70 to cool it, and are then sucked into the fan case through one of the intake ports 84 for the cooling fan 82. Thus, the methanol that flows through the anode passage is cooled, so that heating temperature of the electromotive unit 52 lowers. The outside air that is introduced into the body 14 through the vents 20 and the air in the body 14 pass around the second radiator section 75 to cool it, and are then sucked into the fan case through the other intake port. Thus, air and products that flow through the cathode passage are cooled.

The air sucked into the fan case is discharged into the body 14 through the exhaust ports 86a and 86b. The air discharged through the exhaust port 86a passes around the mixing tank 54 to cool it, and is then discharged to the outside through the vents 22 of the body 14. As this is done, the air discharged through the exhaust port 86a is mixed with the air, steam, and carbon dioxide that are discharged through the exhaust port 78 of the cathode passage. The resulting mixture is discharged to the outside of the body through the vents 22. The air discharged through the other exhaust port 86b is discharged from the body 14 after having cooled the electromotive unit 52 and its surroundings.

The concentration of the methanol in the mixing tank 54 is detected by the concentration sensor 88.
The control section 29 actuates the recovery pump 76 in accordance with the detected concentration to feed the water in the reservoir portion 72c into the tank 54, thereby keeping the methanol concentration constant. The amount of water recovery or steam condensation in the cathode passage is adjusted by controlling the cooling capacity of the second radiator section 75 in accordance with the level of the water recovered in the reservoir portion 72c. In this case, the cooling capacity of the radiator section 75 is adjusted to regulate the water recovery amount by controlling drive voltage for the cooling fan 82 in accordance with the water level detected by the water level detector 77. Further, the control section 29 controls the flow rate of the recovery pump 76 in accordance with the level of the water recovered in the reservoir portion 72c, thereby keeping the amount of the water in the reservoir portion 72c within the given range.

According to the fuel cell 10 constructed in this manner, the interior of the body 14 that is provided with the generator section 7 and that of the bearer section 16 that is provided with the control section 29 are divided by the partition wall 42. If humid air that contains the evaporated fuel or steam is discharged into the body, therefore, it is prevented from getting into the bearer section 16 by the wall 42. The partition wall 42 has the slot 43 through which the wires are passed. The opening area of the slot 43 is restricted to about 10% or less of the overall area of the partition wall. Therefore, the amount of air that gets into the bearer section 16 through the slot 43 can be minimized. Accordingly, there is no possibility of the evaporated fuel or steam touching the control circuit board 30 or the semiconductor devices, so that the control circuit can be prevented from being corroded or shorted. Thus, the control section 29 can be restrained from undergoing malfunction or failure, so that the resulting fuel cell is highly reliable.

According to the fuel cell 10, the exhaust temperature of the cathode is lowered to reduce evaporation of water by means of the first and second radiator sections 70 and 75 and the cooling fan 82.
In this way, the water can be recovered efficiently and reused for the power generation reaction. Accordingly, the problem of water shortage can be solved, and the fuel of a desired concentration can be supplied to the electromotive unit 52. At the same time, the heating temperature of the electromotive unit 52 can be lowered by cooling the anode passage, so that the exhaust temperature of the cathode can be lowered more efficiently. Thus, the resulting fuel cell can perform prolonged, stable power generation.

According to the present embodiment, moreover, exhaust air from the cooling fan 82 is mixed with exhaust air from the cathode passage and discharged to the outside of the body 14. Since the exhaust air from the cathode passage contains some moisture, water drops may possibly be formed around the vents 22 of the body 14. However, the moisture can be reduced to prevent formation of water drops by mixing the air from the cathode passage with the exhaust air from the fan 82. Thus, problems that are attributable to water drops can be prevented to ensure the high-reliability fuel cell.

The present invention is not limited directly to the embodiment described above, and in carrying out the invention, its components may be modified and embodied without departing from the scope or spirit of the invention. Further, various inventions may be made by suitably combining a plurality of components described in connection with the foregoing embodiment. For example, some of the components according to the above-described embodiment may be omitted.
Furthermore, components of different embodiments may be combined as required.

According to the embodiment described above, the generator section comprises the fuel tank 50, electromotive unit 52, first and second radiator sections 70 and 75, and mixing tank 54 that are arranged in the order named. However, this order of arrangement may be variously changed as required.
The fuel cell according to the present invention is not limited to the use for the personal computer described above, and may be also used as a power source for any other electronic devices, such as mobile devices, portable terminals, etc. The fuel cells are not limited to the DMFCs and may be of any other types, such as PEFCs (polymer electrolyte fuel cells).
The cooling fan is not limited to the centrifugal fan and may alternatively be an axial flow fan.

## Claims

1. A fuel cell **characterized by** comprising:
a housing (12) having a first region, a second region, and a partition (42) which divides the first and second regions;
a generator section (7) located in the first region of the housing and having an electromotive unit (52) which generates power based on a chemical reaction; and
a control section (29) which has a control circuit board (30) located in the second region of the housing and controls operation of the generator section.

2. The fuel cell according to claim 1,
**characterized by** further comprising wires which connect the generator section (7) and the control section (29), and wherein the partition (42) has a slot (43) through which the wires are passed, the slot having an opening area about 10% or less of the overall area of the partition.

3. The fuel cell according to claim 2,
**characterized in that** the generator section (7) comprises a fuel tank (50) which contains a fuel, a liquid pump (56) which circulates the fuel between the electromotive unit and the fuel tank, an air pump (64) which supplies air to the electromotive unit (52), and a cooling fan (82), and
the control section (29) comprises a plurality of electronic components mounted on the control circuit board (30) and a power source, and the wires include wires for the pumps, cooling fan, and power source.

4. The fuel cell according to claim 1,
**characterized in that** the housing (12) comprises a body (14) which defines the first region and a bearer section (16) which extends from the body, defines the second region, and is formed to carry an electronic device (11) thereon.

5. The fuel cell according to claim 4,
**characterized in that** the control section (29) comprises a connector (32) which is mounted on the control circuit board (30), projects outward from the bearer section (16), and is connectable to the electronic device (11).
